(19) Europäisches Patentamt / European Patent Office / Office européen des brevets

(11) **EP 4 474 765 B1**

(12) **EUROPÄISCHE PATENTSCHRIFT**

(45) Veröffentlichungstag und Bekanntmachung des Hinweises auf die Patenterteilung:
**25.03.2026   Patentblatt 2026/13**

(21) Anmeldenummer: **23177953.9**

(22) Anmeldetag: **07.06.2023**

(51) Internationale Patentklassifikation (IPC):
**G01B 21/04** *(2006.01)*

(52) Gemeinsame Patentklassifikation (CPC):
**G01B 21/045; G01K 1/026; G01K 7/427;**
B21B 38/006; B21B 38/02; G01B 2210/40;
G01K 2213/00

(54) **AUSWERTUNG VON ORTSAUFGELÖSTEN MESSDATEN EINES FLACHEN WALZGUTS**

EVALUATION OF SPATIALLY RESOLVED MEASUREMENT DATA OF FLAT ROLLED STOCK

ÉVALUATION DE DONNÉES DE MESURE À RÉSOLUTION SPATIALE D'UN PRODUIT LAMINÉ PLAT

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**11.12.2024   Patentblatt 2024/50**

(73) Patentinhaber: **Primetals Technologies Germany GmbH**
**91058 Erlangen (DE)**

(72) Erfinder:
• **KURZ, Matthias**
**91052 Erlangen (DE)**

• **MIELE, Marco**
**91052 Erlangen (DE)**

(74) Vertreter: **Metals@Linz**
**Primetals Technologies Austria GmbH**
**Intellectual Property Upstream IP UP**
**Turmstraße 44**
**4031 Linz (AT)**

(56) Entgegenhaltungen:
WO-A1-2023/041253    CN-A- 101 609 002
JP-A- 2010 008 265    US-B2- 11 364 526

**Beschreibung**

Gebiet der Technik

Die vorliegende Erfindung geht aus von einem Auswertungsverfahren für mittels einer Erfassungseinrichtung erfasster Messdaten eines flachen Walzguts,

- wobei die Messdaten jeweils einem bestimmten Ort in Längsrichtung und/oder Breitenrichtung und/oder Dickenrichtung des flachen Walzguts zugeordnet sind, so dass die Messdaten eine entsprechende ortsaufgelöste Verteilung bilden,
- wobei eine Auswertungseinrichtung die Messdaten von der Erfassungseinrichtung entgegennimmt,
- wobei die Auswertungseinrichtung Parameter für eine mit dem Ort in Längsrichtung und/oder Breitenrichtung und/oder Dickenrichtung des flachen Walzguts variierende Funktion derart festlegt, dass eine Abweichung der mit den optimierten Werten der Parameter parametrierten Funktion von den Messdaten gemäß einem Beurteilungsmaß ein Minimum annimmt,
- wobei die Auswertungseinrichtung basierend auf der Funktion weitergehende Auswertungen vornimmt,
- wobei das Beurteilungsmaß durch eine Summe von Einzelbewertungen bestimmt ist,
- wobei die Auswertungseinrichtung die Einzelbewertungen anhand des Betrages der Differenz eines jeweiligen Messdatums und des Wertes der Funktion am Ort dieses Messdatums ermittelt,
- wobei die jeweilige Einzelbewertung mit dem Betrag der Differenz des jeweiligen Messdatums und des Wertes der endgültigen Funktion am Ort dieses Messdatums ansteigt.

Die vorliegende Erfindung geht weiterhin aus von einem Computerprogramm, das Maschinencode umfasst, der von einer mit einer Erfassungseinrichtung zum Erfassen von Messdaten eines flachen Walzguts, die jeweils einem bestimmten Ort in Längsrichtung und/oder Breitenrichtung und/oder Dickenrichtung des flachen Walzguts zugeordnet sind, so dass die Messdaten eine entsprechende ortsaufgelöste Verteilung bilden, verbundenen Auswertungseinrichtung abarbeitbar ist, wobei die Abarbeitung des Maschinencodes durch die Auswertungseinrichtung bewirkt, dass die Auswertungseinrichtung ein derartiges Auswertungsverfahren ausführt.

Die vorliegende Erfindung geht weiterhin aus von einer Auswertungseinrichtung, wobei die Auswertungseinrichtung eine Schnittstelle zur datentechnischen Verbindung mit einer Erfassungseinrichtung zum Erfassen von Messdaten eines flachen Walzguts, die jeweils einem bestimmten Ort in Längsrichtung und/oder Breitenrichtung und/oder Dickenrichtung des flachen Walzguts zugeordnet sind, so dass die Messdaten eine entsprechende ortsaufgelöste Verteilung bilden, aufweist, wobei die Auswertungseinrichtung mit einem derartigen Computerprogramm programmiert ist, so dass sie im Betrieb ein derartiges Auswertungsverfahren ausführt. Die vorliegende Erfindung geht weiterhin aus von einem Auswertungssystem, das aus einer Erfassungseinrichtung zum Erfassen von Messdaten eines flachen Walzguts, die jeweils einem bestimmten Ort in Längsrichtung und/oder Breitenrichtung und/oder Dickenrichtung des flachen Walzguts zugeordnet sind, so dass die Messdaten eine entsprechende ortsaufgelöste Verteilung bilden, und einer mit der Erfassungseinrichtung datentechnisch verbundenen Auswertungseinrichtung besteht, wobei die Auswertungseinrichtung so wie vorstehend ausgeführt ausgebildet ist, die im Betrieb ein derartiges Auswertungsverfahren ausführt. Relevanter Stand der Technik ist WO 2023/041253.

Stand der Technik

Die genannten Gegenstände sind allgemein bekannt. Im Rahmen der Vorgehensweisen des Standes der Technik erfolgt in aller Regel eine Optimierung gemäß dem Verfahren der minimalen Quadrate. Wenn mit xi der jeweilige Messort und mit yi das jeweilige Messdatum bezeichnet werden, mit f die Funktion, mit a die Parameter der Funktion und mit aopt die optimierten Parameter der Funktion bezeichnet werden, erfolgt die Ermittlung der Parameter und damit der Funktion dadurch, dass das Problem

$$aopt = \arg\min_{a} \left( \sum_{i} (yi - f_a(xi))^2 \right) \tag{1}$$

gelöst wird. Die entsprechenden Ansätze und auch die Lösungsverfahren für diesen Ansatz sind Fachleuten allgemein bekannt.

Die Funktion f ist oftmals ein Polynom, beispielsweise ein Polynom 4. oder 6. Grades. Es kann sich aber auch um eine andere Funktion handeln, solange die Funktion - individuell für den jeweiligen Messort - bezüglich der Parameter linear ist. Beispielsweise kann die Funktion f abschnittweise durch Splines definiert sein, d.h. als Polynome für jeweilige Abschnitte.

Zusammenfassung der Erfindung

Bei der Produktion eines flachen Walzguts, beispielsweise eines Metallbandes oder einer Metallplatte (Grobblech) werden nach dem Walzen oftmals ortsaufgelöste Messdaten des gewalzten Materials erfasst, beispielsweise dessen Temperaturverteilung in Längs- und/oder Breitenrichtung, der Konturverlauf in Breitenrichtung oder der Planheitsverlauf in Breitenrichtung. Bei einem relativ dicken flachen Walzgut, beispielsweise einem Vorband, kann auch eine Erfassung beispielsweise der Temperatur an einer Bandkante in Dickenrichtung erfolgen. In manchen Fällen werden die gleichen Vorgehensweisen auch für das noch ungewalzte flache Walzgut ergriffen.

Die zugehörigen Messdaten (Rohwerte) werden an diskreten Orten des flachen Walzguts erfasst. Beispielsweise werden der Konturverlauf und der Planheitsverlauf in Breitenrichtung an bestimmten Orten erfasst. Man spricht von einem Profil- oder Planheitsscan. In manchen Fällen wird die Erfassung über die Länge des flachen Walzguts gesehen mehrmals wiederholt, so dass der jeweilige Scan in Längsrichtung des flachen Walzguts gesehen einem entsprechenden Abschnitt des flachen Walzguts zugeordnet ist.

Die Messdaten werden üblicherweise vorverarbeitet. Im Rahmen der Vorverarbeitung erfolgt die Ermittlung der obenstehend Funktion. Die weitergehende Auswertung basiert sodann auf der Funktion. Beispielsweise können bei einem Profilscan anhand der Funktion die Profilwerte ermittelt werden, beispielsweise der C25-Wert, der C40-Wert oder der C100-Wert. Sowohl die ermittelte Funktion als auch die aus der Funktion abgeleiteten Werte sind Qualitätsparameter des flachen Walzguts. Sie werden oftmals Regelungen zugeführt, die im Rahmen der Herstellung weiterer flacher Walzgüter oder weiterer Abschnitte des flachen Walzguts eingesetzt werden, beispielsweise im Rahmen einer üblichen Profil- und Planheitsregelung. Auch werden Prozessmodelle oftmals unter Verwertung der Funktion oder daraus abgeleiteter Werte adaptiert.

Die Messdaten sind oftmals mit Störungen behaftet. Derartige Störungen können beispielsweise auf Wassertropfen und/oder Wasserdampf am jeweiligen Messort zurückzuführen sein. Gestörte Messdaten verändern in manchen Fällen den Verlauf der Funktion in signifikanter Weise und führen dadurch zu Problemen bei der weitergehenden Auswertung, beispielsweise bei der Ansteuerung von Profil- und Planheitsstellgliedern eines Walzgerüsts.

Die Aufgabe der vorliegenden Erfindung besteht darin, Möglichkeiten zu schaffen, mittels derer eine stabilere und robustere Ermittlung der Funktion möglich ist.

Die Aufgabe wird durch ein Auswertungsverfahren mit den Merkmalen des Anspruchs 1 gelöst. Vorteilhafte Ausgestaltungen des Auswertungsverfahrens sind Gegenstand der abhängigen Ansprüche 2 bis 5.

Erfindungsgemäß wird ein Auswertungsverfahren der eingangs genannten Art dadurch ausgestaltet, dass die jeweilige Einzelbewertung mit dem Betrag der Differenz des jeweiligen Messdatums und des Wertes der Funktion am Ort dieses Messdatums weniger als quadratisch ansteigt.

Die vorliegende Erfindung beruht auf der Erkenntnis, dass die Minimierung der Summe der quadratischen Abweichungen, wie sie im Stand der Technik erfolgt, zu einer sehr hohen Wichtung von Störungen (Ausreißern) führt, während diese Wichtung umso mehr abnimmt, je weniger die jeweilige Einzelbewertung bei einem größeren Betrag der Differenz des jeweiligen Messdatums und des Wertes der Funktion am Ort dieses Messdatums ansteigt.

Das Ausmaß, um welches die jeweilige Einzelbewertung weniger als quadratisch ansteigt, kann nach Bedarf gewählt sein. Sie kann auch näherungsweise bei einem quadratischen Anstieg liegen, beispielsweise eine 1,8-Potenz oder eine 1,9-Potenz des Betrages der Abweichung sein. Auch dies führt bereits zu einer gewissen Verbesserung. Allgemein gilt, dass die Wichtung einzelner Abweichungen (hervorgerufen durch Ausreißer) umso schwächer ist, je stärker die jeweilige Einzelbewertung weniger als quadratisch ansteigt. Vorzugsweise sollte daher ein nennenswerter Abstand von einer 2,0-Potenz (= der quadratischen Abweichung) eingehalten werden. Beispielsweise kann - in exakter Inversion eines quadratischen Anstiegs - ein Anstieg gemäß einer Wurzelfunktion erfolgen, also einer 0,5-Potenz:

$$aopt = \arg\min_a \left( \sum_i \sqrt{| yi - f_a(xi) |} \right). \tag{2}$$

In Versuchen hat es sich als völlig ausreichend erwiesen, wenn die jeweilige Einzelbewertung zumindest in etwa linear mit dem Betrag der Differenz des jeweiligen Messdatums und des Wertes der Funktion am Ort dieses Messdatums ansteigt. Mit der Formulierung "in etwa linear" ist gemeint, dass die jeweilige Einzelbewertung mit einer x-Potenz des Betrages der Differenz des jeweiligen Messdatums und des Wertes der Funktion am Ort dieses Messdatums ansteigt, wobei x zwischen 0,8 und 1,2 liegt. Besonders bevorzugt ist, dass die jeweilige Einzelbewertung mit einer 1,0-Potenz des Betrages der Differenz des jeweiligen Messdatums und des Wertes der Funktion am Ort dieses Messdatums ansteigt, also mit dem Betrag selbst übereinstimmt. Insbesondere für den exakt linearen Anstieg, dass also die optimierten Parameter aopt der Funktion f gemäß der Beziehung

$$aopt = \arg\min_a \left( \sum_i | yi - f_a(xi) | \right) \qquad (3)$$

ermittelt werden, sind Fachleuten Lösungen allgemein bekannt, beispielsweise das sogenannte Simplex-Verfahren.

Alternativ ist es möglich, dass zwar eine Ermittlung der Parameter durch Minimieren eines Beurteilungsmaßes erfolgt, wobei das Beurteilungsmaß durch eine Summe von Einzelbewertungen bestimmt ist und die jeweilige Einzelbewertung mit dem Quadrat der Differenz des jeweiligen Messdatums und des Wertes der Funktion am Ort dieses Messdatums ansteigt, zusätzlich jedoch Wichtungsfaktoren verwendet werden. In diesem Fall wird ein sogenanntes recursively re-weighted least square-Verfahren angewendet. Bei einem recursively re-weighted least square-Verfahren wird so vorgegangen, dass die Auswertungseinrichtung zum Festlegen der Parameter in einer Anzahl von Iterationen

- für die jeweilige Iteration

-- jeweils eine Summe von für die jeweilige Iteration gültigen Einzelbewertungen ermittelt und für die jeweilige Iteration gültige Parameter festlegt, so dass eine Abweichung der Funktion, wie sie durch die für die jeweilige Iteration gültigen Parameter bestimmt ist, von den Messdaten gemäß dem Beurteilungsmaß ein Minimum annimmt,
-- die für die jeweilige Iteration gültigen Einzelbewertungen durch Wichtung des Quadrates der Differenz des jeweiligen Messdatums und des Wertes der Funktion, wie sie durch die für die jeweilige Iteration gültigen Parameter bestimmt ist, am Ort dieses Messdatums mit einem für das jeweilige Messdatum und die jeweilige Iteration individuellen Wichtungsfaktor ermittelt und

- entweder die für die jeweilige Iteration gültigen Parameter als endgültig festgelegte Parameter übernimmt oder für die Messdaten anhand des Betrages der Differenz des jeweiligen Messdatums und des Wertes der Funktion, wie sie durch die für die jeweilige Iteration gültigen Parameter bestimmt ist, den Wichtungsfaktor für das jeweilige Messdatum für die nächste Iteration ermittelt.

In Formeln ausgedrückt erfolgt für die jeweilige Iteration die Festlegung der optimierten Parameter aopt somit gemäß der Beziehung

$$aopt = \arg\min_a \left( \sum_i gi(yi - f_a(xi))^2 \right). \qquad (4)$$

Für die erste Iteration werden die Wichtungsfaktoren gi auf Anfangswerte gesetzt, üblicherweise einheitlich auf denselben Wert, beispielsweise auf den Wert 1:

$$gi = 1. \qquad (5)$$

Für die jeweils nachfolgende Iteration werden die Wichtungsfaktoren gi - individuell für das jeweilige Messdatum - anhand einer weiteren Funktion h ermittelt, die vom Betrag der Differenz des jeweiligen Messdatums und des Wertes der Funktion, wie sie durch die für die jeweilige Iteration gültigen Parameter bestimmt ist, abhängig ist:

$$gi = h(| yi - f_{aopt}(xi) |). \qquad (6)$$

Die Iterationen werden fortgesetzt, bis ein Abbruchkriterium erfüllt ist. Das Abbruchkriterium kann nach Bedarf bestimmt sein. Beispielsweise kann das Abbruchkriterium erfüllt sein, wenn eine vorbestimmte Anzahl von Iterationen ausgeführt worden ist. Auch kann das Abbruchkriterium erfüllt sein, wenn die Änderung der Wichtungsfaktoren gi unter eine vorbestimmte Schwelle sinkt oder wenn das Beurteilungsmaß unter eine vorbestimmte Schwelle sinkt. Auch Kombinationen sind möglich.

Nach dem Ausführen der letzten Iteration übernimmt die Auswertungseinrichtung die für die letzte Iteration gültigen vorläufigen Parameter als endgültig festgelegte Parameter.

Im Rahmen der Ermittlung der Wichtungsfaktoren für die jeweils nächste Iteration - also im Ergebnis durch die weitere Funktion h - muss im Kern gewährleistet sein, dass der jeweilige Wichtungsfaktor mit dem Betrag der Differenz des jeweiligen Messdatums und des Wertes der Funktion streng monoton fällt. Es ist jedoch in der Regel ausreichend, wenn diese Bedingung dann erfüllt ist, wenn der Betrag der Differenz des jeweiligen Messdatums und des Wertes der Funktion zwischen einem Minimalwert und einem Maximalwert liegt. Unterhalb des Minimalwertes reicht es oftmals aus, wenn der jeweilige Wichtungsfaktor mit dem Betrag der Differenz des jeweiligen Messdatums und des Wertes der Funktion monoton oder streng monoton fällt. Oberhalb des Maximalwertes fällt der jeweilige Wichtungsfaktor mit dem Betrag der Differenz des jeweiligen Messdatums und des Wertes der Funktion oftmals weiterhin streng monoton. Gegebenenfalls kann der Wichtungsfaktor in diesem Wertebereich des Betrages der Differenz des jeweiligen Messdatums und des Wertes der Funktion aber auch den Wert 0 annehmen. Dies hat zur Folge, dass das entsprechende Messdatum als Ausreißer klassifiziert wird und bei der weiteren Ermittlung der Funktion völlig unberücksichtigt bleibt.

Besonders bevorzugt ist eine Ausgestaltung, bei welcher der Wichtungsfaktor des jeweiligen Messdatums für die nächste Iteration zumindest dann, wenn der Betrag der Differenz des jeweiligen Messdatums und des Wertes der Funktion, wie sie durch die für die jeweilige Iteration gültigen Parameter bestimmt ist, zwischen dem Minimalwert und dem Maximalwert liegt, zumindest in etwa gleich dem Kehrwert des Betrages der Differenz des jeweiligen Messdatums und des Wertes der Funktion, wie sie durch die für die jeweilige Iteration gültigen Parameter bestimmt ist, ist. Durch diese Vorgehensweise werden die Vorteile der einfachen Ermittlung der Parameter (und der Robustheit gegen Störungen miteinander kombiniert. Denn für die Ermittlung der Parameter können Vorgehensweisen angewendet werden, die sehr ähnlich zu den Vorgehensweisen sind, die bei der Minimierung der quadratischen Abweichungen angewendet werden. Durch die Wichtung mit dem Kehrwert des Betrages der Differenz des jeweiligen Messdatums und des Wertes der jeweiligen vorläufigen Funktion erfolgt im Ergebnis eine Reduzierung der 2,0-Potenz auf eine 1,0-Potenz.

Die Aufgabe wird weiterhin durch ein Computerprogramm mit den Merkmalen des Anspruchs 6 gelöst. Erfindungsgemäß bewirkt die Abarbeitung des Computerprogramms, dass die Auswertungseinrichtung ein erfindungsgemäßes Auswertungsverfahren ausführt.

Die Aufgabe wird weiterhin durch eine Auswertungseinrichtung mit den Merkmalen des Anspruchs 7 gelöst. Erfindungsgemäß ist die Auswertungseinrichtung mit einem erfindungsgemäßen Computerprogramm programmiert, so dass die Auswertungseinrichtung ein erfindungsgemäßes Auswertungsverfahren ausführt.

Die Aufgabe wird weiterhin durch ein Auswertungssystem mit den Merkmalen des Anspruchs 8 gelöst. Erfindungsgemäß ist die Auswertungseinrichtung des Systems als erfindungsgemäße Auswertungseinrichtung ausgebildet, die im Betrieb ein erfindungsgemäßes Auswertungsverfahren ausführt.

Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Zeichnungen näher erläutert wird. Dabei zeigen:

FIG 1       ein Walzwerk und zugehörige Einrichtungen,
FIG 2       ein flaches Walzgut von oben,
FIG 3       eine Verteilung von Messdaten und eine Funktion,
FIG 4 bis 9     Ablaufdiagramme und
FIG 10      eine Verteilung von Messdaten und Funktionen.

Beschreibung der Ausführungsformen

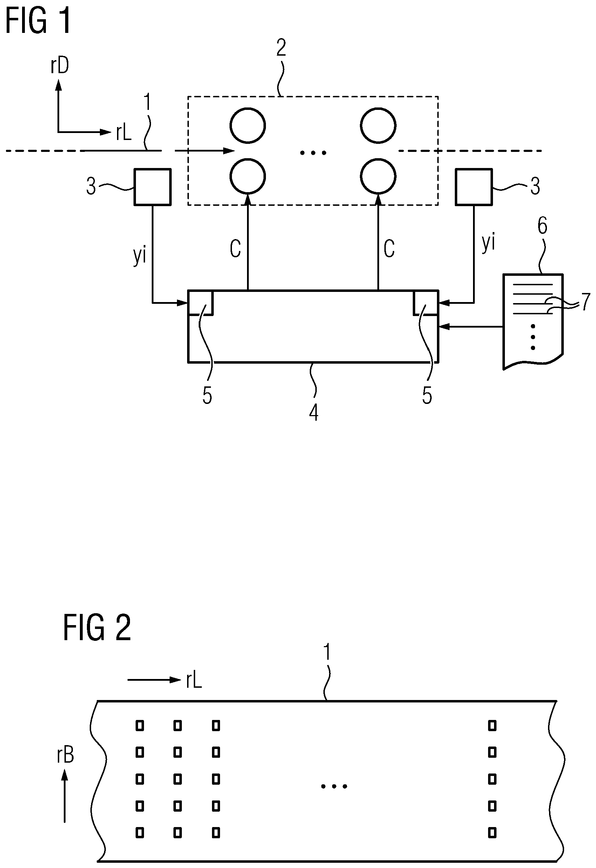

Gemäß FIG 1 soll ein flaches Walzgut 1 in einem Walzwerk 2 gewalzt werden. Das Walzwerk 2 ist in FIG 1 als mehrgerüstige Walzstraße dargestellt, deren Walzgerüste von dem Walzgut 1 sequenziell nacheinander durchlaufen werden. Das Walzwerk könnte jedoch auch nur ein einzelnes Walzgerüst aufweisen und/oder reversierend arbeiten. Das Walzwerk kann weiterhin auch eine Kühlstrecke umfassen. Weiterhin sind in FIG 1 nur die Arbeitswalzen der Walzgerüste dargestellt. Üblicherweise weisen die Walzgerüste weitere Walzen auf, insbesondere Stützwalzen. Das flache Walzgut 1 ist in der Regel ein metallisches Walzgut. Es kann beispielsweise aus Stahl oder aus Aluminium bestehen. Es kann als Band oder - insbesondere im Falle von Stahl - als Grobblech ausgebildet sein.

Dem Walzwerk ist (mindestens) eine Erfassungseinrichtung 3 zugeordnet. Gemäß der Darstellung in FIG 1 ist sowohl eingangsseitig des Walzwerks 2 als auch ausgangsseitig des Walzwerks 2 jeweils eine Erfassungseinrichtung 3 vorhanden. Die Erfassungseinrichtungen 3 sind Bestandteil eines Auswertungssystems im Sinne der vorliegenden Erfindung. Mittels der jeweiligen Erfassungseinrichtung 3 werden Messdaten yi des flachen Walzguts 1 erfasst. Die Messdaten yi sind jeweils einem bestimmten Ort xi in Längsrichtung rL, und/oder Breitenrichtung rB (siehe FIG 2) und/oder Dickenrichtung rD des flachen Walzguts 1 zugeordnet. Die Messdaten yi bilden somit eine entsprechende ortsaufgelöste Verteilung.

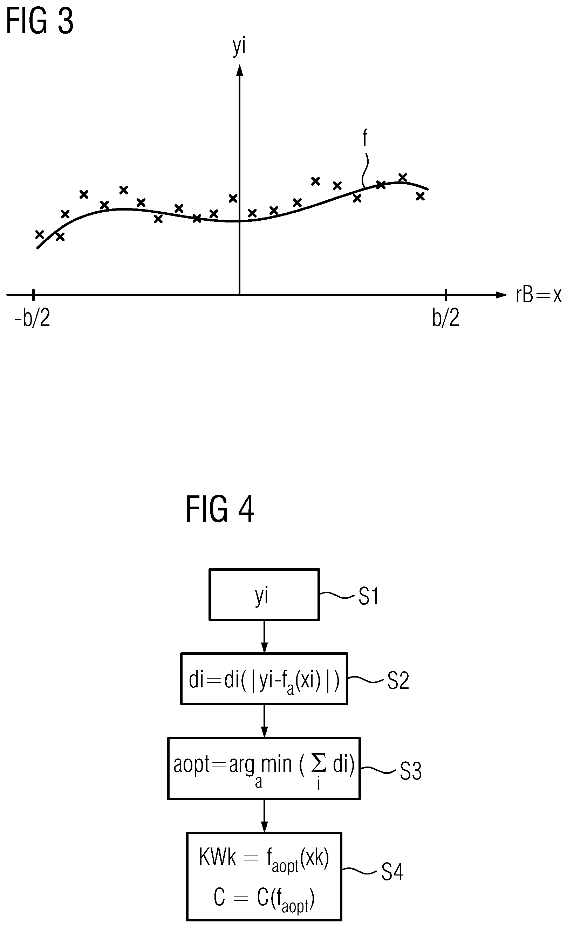

Beispielsweise können die Messdaten yi entsprechend der Darstellung rechts in FIG 2 und in FIG 3 eindimensional in der Breitenrichtung rB verteilt sein. Mit b ist in FIG 3 die Breite des Walzguts 1 bezeichnet. In diesem Fall können die Messdaten yi beispielsweise für die Dicke des Walzguts 1 oder die Planheit des Walzguts 1 am jeweiligen Ort xi charakteristisch sein. Alternativ können die Messdaten yi entsprechend der Darstellung links in FIG 2 zweidimensional in der Längsrichtung rL und der Breitenrichtung rB verteilt sein. In diesem Fall können die Messdaten yi beispielsweise für die Temperatur des Walzguts 1 am jeweiligen Ort xi charakteristisch sein. Auch andere ein- oder mehrdimensionale Verteilungen (auch in der Dickenrichtung rD, siehe FIG 1) sind möglich.

Das Auswertungssystem umfasst weiterhin eine Auswertungseinrichtung 4. Die Auswertungseinrichtung 4 ist mit den vorhandenen Erfassungseinrichtungen 3 datentechnisch verbunden, so dass die Auswertungseinrichtung 4 von den Erfassungseinrichtungen 3 deren Messdaten yi entgegennehmen kann. Die Auswertungseinrichtung 4 weist zu diesem Zweck eine entsprechende Schnittstelle 5 auf, gegebenenfalls für jede Erfassungseinrichtung 3 jeweils eine eigene Schnittstelle 5. Die Auswertungseinrichtung 4 ist im vorliegenden Fall als Steuereinrichtung ausgebildet, die das Walzwerk steuert. Dies ist aber nicht zwingend erforderlich.

Die Auswertungseinrichtung 4 ist mit einem Computerprogramm 6 programmiert. Das Computerprogramm 6 umfasst Maschinencode 7, der von der Auswertungseinrichtung 4 abarbeitbar ist. Die Programmierung der Auswertungseinrichtung 4 mit dem Computerprogramm 6 bzw. die Abarbeitung des Maschinencodes 7 durch die Auswertungseinrichtung 4 bewirkt, dass die Auswertungseinrichtung 4 im Betrieb ein Auswertungsverfahren ausführt, das nachstehend in Verbindung mit FIG 4 näher erläutert wird. Im Rahmen der Erläuterungen zu FIG 4 wird angenommen, dass nur eine der beiden Erfassungseinrichtungen 3 vorhanden ist. Falls sowohl einlaufseitig als auch auslaufseitig jeweils eine Erfassungseinrichtung 3 vorhanden ist, werden die entsprechenden Messdaten yi getrennt voneinander verarbeitet.

Gemäß FIG 4 nimmt die Auswertungseinrichtung 4 in einem Schritt S1 die Messdaten yi von der Erfassungseinrichtung 3 entgegen.

In einem Schritt S2 ermittelt die Auswertungseinrichtung 4 Einzelbewertungen di. Die Auswertungseinrichtung 4 ermittelt die jeweilige Einzelbewertung di anhand des Betrages der Differenz eines jeweiligen Messdatums yi und des Wertes einer mit Parametern a parametrierten Funktion f am Ort xi dieses Messdatums yi. Die Funktion f variiert mit dem Ort x in Längsrichtung rL und/oder Breitenrichtung rB und/oder Dickenrichtung rD des Walzguts 1. Die Funktion f variiert hierbei in den gleichen Dimensionen, in denen auch die Messdaten yi die entsprechende ortsaufgelöste Verteilung bilden. Soweit erforderlich, können für die Parameter a anfängliche Werte festgesetzt werden. Die jeweilige Einzelbewertung di ist genau genommen kein Zahlenwert, sondern ein von den Parametern a abhängiger parametrierter Wert.

In einem Schritt S3 führt die Auswertungseinrichtung 4 eine Optimierung durch und legt dadurch optimierte Werte aopt für die Parameter a der Funktion f fest. Beispielsweise im eindimensionalen Fall kann die Auswertungseinrichtung 4 als Parameter a die Koeffizienten eines Polynoms 4. oder 6. Grades festlegen. Die Festlegung erfolgt derart, dass eine Abweichung der Funktion f von den Messdaten yi gemäß einem Beurteilungsmaß ein Minimum annimmt. Das Beurteilungsmaß ist durch die Summe der Einzelbewertungen di bestimmt.

Sodann nimmt die Auswertungseinrichtung 4 in einem Schritt S4 weitergehende Auswertungen vor. Diese Auswertungen erfolgen basierend auf der Funktion f. Beispielsweise kann die Auswertungseinrichtung 4 im Schritt S4 die Funktion f an vorbestimmten Orten xk auswerten und dadurch Kennwerte KWk des flachen Walzguts 1 ermitteln. Die Orte xk können nach Bedarf mit den Orten xi oder einem Teil der Orte xi übereinstimmen oder von den Orten xi verschiedene Orte sein. Auch kann die Auswertungseinrichtung 4 im Schritt S4 die Funktion f als solche verwerten. In dem Fall, dass die Auswertungseinrichtung 4 als Steuereinrichtung für das Walzwerk ausgebildet ist, kann die Auswertungseinrichtung 4 beispielsweise im Schritt S4 Steuergrößen C, mit denen die Walzgerüste des Walzwerks 2 angesteuert werden, unter Verwertung der Kennwerte KWk und/oder der Funktion f ermitteln.

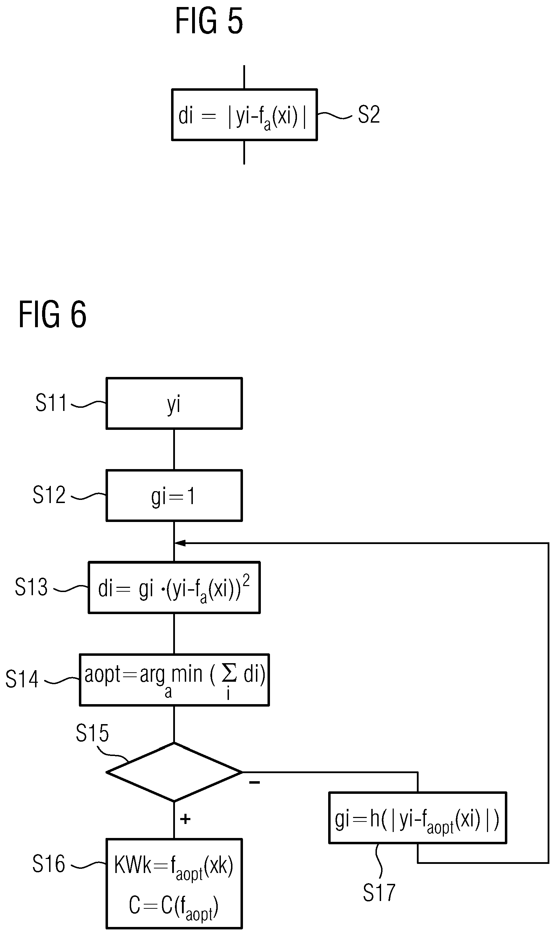

FIG 5 zeigt eine mögliche Ausgestaltung des Schrittes S2 von FIG 4. Gemäß FIG 5 ermittelt die Auswertungseinrichtung 4 die jeweilige Einzelbewertung di derart, dass sie linear mit dem Betrag der Differenz des jeweiligen Messdatums yi und des Wertes der Funktion f am Ort xi dieses Messdatums yi ansteigt. Im Rahmen von FIG 5 erfolgt ein exakt linearer Anstieg. Der Anstieg könnte aber auch etwas stärker oder etwas schwächer als linear sein, also eine z-Potenz dieses Betrages, wobei der Exponent z der Potenzfunktion geringfügig kleiner oder geringfügig größer als 1 ist. "Geringfügig" bedeutet vorliegend eine Abweichung von maximal 0,2.

FIG 6 zeigt eine Modifikation der Vorgehensweise von FIG 4. Gemäß FIG 4 nimmt die Auswertungseinrichtung 4 in einem Schritt S11 die Messdaten yi von der Erfassungseinrichtung 3 entgegen. Der Schritt S11 korrespondiert mit dem Schritt S1 von FIG 4.

In einem Schritt S12 ermittelt die Auswertungseinrichtung 4 - individuell für die Messdaten yi - einen jeweiligen Wichtungsfaktor gi. Der Schritt S12 kann insofern entartet sein, als die Wichtungsfaktoren gi für die Messdaten yi einheitlich derselbe sein kann, beispielsweise den Wert 1 aufweisen kann.

In einem Schritt S13 ermittelt die Auswertungseinrichtung 4 die Einzelbewertungen di. Die Auswertungseinrichtung 4 ermittelt die jeweilige Einzelbewertung di im Rahmen des Schrittes S13 anhand des Quadrates der Differenz eines jeweiligen Messdatums yi und des Wertes der Funktion f am Ort xi dieses Messdatums yi. Die Auswertungseinrichtung 4 wichtet dieses Quadrat jedoch mit dem jeweiligen Wichtungsfaktor gi. Die Funktion f ist die gleiche wie im Schritt S2 von FIG 4. Auch hier ist die jeweilige Einzelbewertung di genau genommen kein Zahlenwert, sondern ein von den Parametern a abhängiger parametrierter Wert.

In einem Schritt S14 legt die Auswertungseinrichtung 4 optimierte Werte aopt für die Parameter a der Funktion f fest. Die Festlegung der optimierten Werte aopt des Schrittes S14 erfolgt völlig analog zum Schritt S3 von FIG 4. Der Unterschied besteht jedoch darin, dass die Festlegung des Schrittes S14 im Gegensatz zur Festlegung des Schrittes S3 nur vorläufig ist.

In einem Schritt S15 prüft die Auswertungseinrichtung 4, ob ein Abbruchkriterium erfüllt ist. Wenn das Abbruchkriterium erfüllt ist, gelten die optimierten Werte aopt der Parameter a, wie sie bei der vorherigen Ausführung des Schrittes S14 festgelegt wurden, als endgültig. In diesem Fall geht die Auswertungseinrichtung 4 zu einem Schritt S16 über. Im Schritt S16 nimmt die Auswertungseinrichtung 4 weitergehende Auswertungen vor. Der Schritt S16 korrespondiert mit dem Schritt S4 von FIG 4.

Wenn die Auswertungseinrichtung 4 nicht zum Schritt S16 übergeht, geht sie zu einem Schritt S17 über. Im Schritt S17 ermittelt die Auswertungseinrichtung 4 die Wichtungsfaktoren gi neu, und zwar individuell für das jeweilige Messdatum yi. Die Ermittlung des Schrittes S17 erfolgt gemäß einer weiteren Funktion h. Die weitere Funktion h ist derart bestimmt, dass sie - jedenfalls über weite Bereiche - streng monoton fallend ist, also einen umso kleineren Wert annimmt, je größer das Argument der weiteren Funktion h ist, also der Betrag der Differenz des jeweiligen Messdatums yi und des Wertes der mit den optimierten Werten aopt der Parameter a parametrierten Funktion f am Ort xi dieses Messdatums yi. Vom Schritt S17 aus geht die Auswertungseinrichtung 4 zum Schritt S13 zurück.

Sowohl durch die Vorgehensweise von FIG 5 als auch durch die Vorgehensweise von FIG 6 wird erreicht, dass die jeweilige Einzelbewertung di zwar mit dem Betrag der Differenz des jeweiligen Messdatums yi und des Wertes der Funktion f (wie sie gerade parametriert ist) am Ort xi dieses Messdatums yi ansteigt, aber weniger als quadratisch ansteigt. Bei der Vorgehensweise von FIG 5 gilt dies bereits für die direkte Ermittlung der optimierten Parameter aopt für die Funktion f. Bei der Vorgehensweise gemäß FIG 6 gilt dies - mit Ausnahme der ersten Iteration - nicht nur für die letzte Iteration, sondern auch für die vorhergehenden Iterationen.

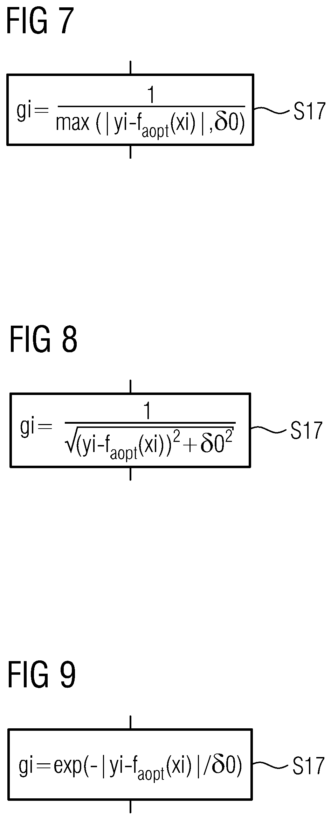

FIG 7 zeigt eine mögliche Ausgestaltung des Schrittes S17 von FIG 6. Bei der Ausgestaltung von FIG 7 ist der jeweilige Wichtungsfaktor gi für das jeweilige Messdatum yi für die nächste Iteration im wesentlichen reziprok zum Betrag der Differenz des jeweiligen Messdatums yi und des Wertes der mit den optimierten Werten aopt der Parameter a parametrierten Funktion f am Ort xi dieses Messdatums yi. Dies gilt jedoch nur, wenn dieser Betrag oberhalb eines Minimalwertes $\delta 0$ liegt. Unterhalb des Minimalwertes $\delta 0$ nimmt der jeweilige Wichtungsfaktor gi den Wert $1/\delta 0$ an und ist damit konstant bzw. fällt (nur) monoton. Dies ist jedoch unkritisch, weil insbesondere die Wichtung großer Abweichungen reduziert werden soll.

FIG 8 zeigt eine weitere mögliche Ausgestaltung des Schrittes S17 von FIG 6. Bei der Ausgestaltung von FIG 8 wird das Quadrat der Differenz des jeweiligen Messdatums yi und des Wertes der mit den optimierten Werten aopt der Parameter a parametrierten Funktion f am Ort xi dieses Messdatums yi gebildet und zu dem so ermittelten - selbstverständlich nicht negativen - Wert das Quadrat des Minimalwertes $\delta 0$ addiert. Dann wird aus dieser Summe die Wurzel gezogen. Der Unterschied zur Ausgestaltung von FIG 7 besteht darin, dass ein weicher Übergang erfolgt, wenn der Betrag der Differenz des jeweiligen Messdatums yi und des Wertes der Funktion f am Ort xi dieses Messdatums yi den Wertebereich von geringfügig unterhalb des Minimalwertes $\delta 0$ bis geringfügig oberhalb des Minimalwertes $\delta 0$ durchläuft. Im übrigen ist die Ausgestaltung gemäß FIG 8 völlig analog zu der von FIG 7.

FIG 9 zeigt eine weitere mögliche Ausgestaltung des Schrittes S17 von FIG 6. Bei der Ausgestaltung von FIG 9 geht der Betrag der Differenz des jeweiligen Messdatums yi und des Wertes der mit den optimierten Werten aopt der Parameter a parametrierten Funktion f am Ort xi dieses Messdatums yi mit negativem Vorzeichen in den Exponenten einer positiven Zahl ein, in dem Beispiel von FIG 9 der Eulerschen Zahl e. Bei der Ausgestaltung von FIG 9 fällt der jeweilige Wichtungsfaktor gi für das jeweilige Messdatum yi für die nächste Iteration im gesamten möglichen Wertebereich dieses Betrages streng monoton, also sowohl oberhalb als auch unterhalb des Minimalwertes $\delta 0$.

Durch jede der Ausgestaltungen der FIG 7 bis 9 wird weiterhin gewährleistet, dass die Wichtungsfaktoren gi auch dann einen definierten endlichen Wert annehmen, wenn der Betrag der Differenz des jeweiligen Messdatums yi und des Wertes der Funktion f am Ort xi dieses Messdatums yi einen sehr kleinen Wert annimmt. Weiterhin wird sowohl bei der Ausgestaltung gemäß FIG 7 als auch bei der Ausgestaltung gemäß FIG 8 erreicht, dass der jeweilige Wichtungsfaktor gi für die nächste Iteration zumindest dann, wenn der Betrag der Differenz des jeweiligen Messdatums yi und des Wertes der Funktion f oberhalb des Minimalwertes $\delta 0$ liegt, exakt oder zumindest in etwa gleich dem Kehrwert dieses Betrages ist. Bei der Ausgestaltung von FIG 9 ist dies nicht der Fall.

Nicht dargestellt ist eine weitere Modifikation, die bei jeder der Ausgestaltungen der FIG 6 bis 9 realisierbar ist. Denn es ist möglich, einen Maximalwert festzulegen. Wenn der Betrag der Differenz des jeweiligen Messdatums yi und des Wertes der Funktion f am jeweiligen Ort xi den Maximalwert überschreitet, kann es zulässig sein, den Wichtungsfaktor gi auf den Wert 0 zu setzen. In diesem Fall liegt oberhalb des Maximalwertes kein streng monotones Abfallen mehr vor, wie dies beispielsweise bei den Ausgestaltungen der FIG 7 bis 9 ist. Durch das Setzen des Wichtungsfaktors gi auf den Wert 0 wird erreicht, dass das entsprechende Messdatum yi als Ausreißer klassifiziert wird und bei der Ermittlung des Beurteilungsmaßes überhaupt nicht mehr berücksichtigt wird.

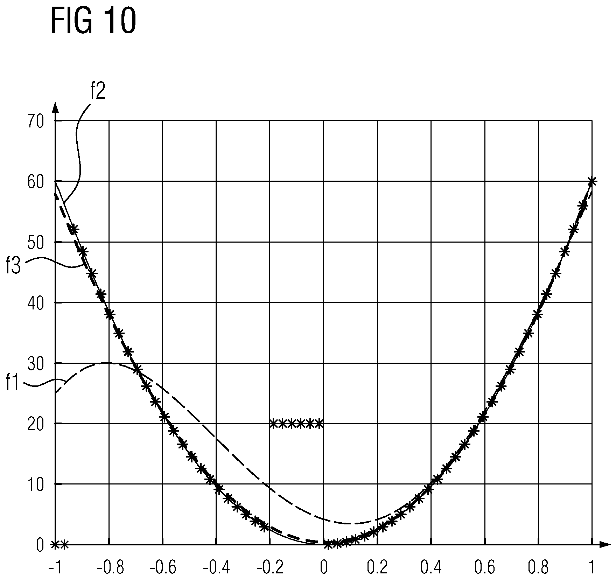

FIG 10 verdeutlicht die Vorteile, die sich durch die vorliegende Erfindung ergeben.

Im Rahmen von FIG 10 wurden die Messwerte yi, die in FIG 10 durch kleine Sternchen angedeutet sind, simuliert. Ersichtlich ergibt sich vom Ansatz her eine Parabel, also ein Polynom 2. Grades. Es wurde jedoch angenommen, dass im Im Wertebereich zwischen -1,0 und -0,9 sowie im Wertebereich zwischen -0,2 und 0,0 ist jedoch jeweils eine Störung aufgetreten ist, so dass in diesen beiden Wertebereichen "Ausreißer" auftreten, was für eine Person mit ihrer Intelligenz ohne weiteres erkennbar ist. Als Funktion f wurde ein Polynom 4. Grades angenommen.

Mit f1 ist in FIG 10 eine Funktion f bezeichnet, wie sie sich durch die übliche Minimierung der Fehlerquadrate ergibt, wenn die Auswertungseinrichtung 4 also die Einzelbewertungen di anhand des Quadrates der Differenz eines jeweiligen Messdatums yi und des Wertes der Funktion f am Ort xi dieses Messdatums yi bestimmt. Die Funktion f1 kann sich zwar auch bei der vorliegenden Erfindung ergeben, aber nur beim erstmaligen Abarbeiten der Schritte S11 bis S14, wenn also die Wichtungsfaktoren gi (noch) alle den Wert 1 (bzw. allgemein einen einheitlichen Wert) aufweisen. Ersichtlich gibt die Funktion f1 den durch die Messdaten yi erfassten funktionalen Verlauf nur sehr schlecht wieder.

Mit f2 ist in FIG 10 eine Funktion f bezeichnet, wie sie sich bei der Ausgestaltung gemäß den FIG 4 und 5 ergibt, wenn die Auswertungseinrichtung 4 also die Einzelbewertungen di direkt gleich dem Betrag der Differenz eines jeweiligen Messdatums yi und des Wertes der Funktion f am Ort xi dieses Messdatums yi setzt. Ersichtlich gibt die Funktion f2 den durch die Messdaten yi erfassten funktionalen Verlauf in nahezu idealer Art und Weise wieder.

Mit f3 ist in FIG 10 eine Funktion f bezeichnet, wie sie sich bei der Ausgestaltung gemäß den FIG 6 und 7 bzw. den FIG 6 und 8 ergibt, wenn die Auswertungseinrichtung 4 also die Einzelbewertungen di durch Wichtung des Quadrates der Differenz eines jeweiligen Messdatums yi und des Wertes der Funktion f am Ort xi dieses Messdatums yi mit dem jeweiligen individuell ermittelten Wichtungsfaktor gi bestimmt. Konkret zeigt die Funktion f3 das Ergebnis nach fünf Iterationen. Ersichtlich gibt die Funktion f3 den durch die Messdaten yi erfassten funktionalen Verlauf zwar nicht in nahezu idealer Art und Weise, wohl aber in sehr guter Näherung wieder.

Die vorliegende Erfindung weist viele Vorteile auf. Insbesondere kann die Funktion f in einer Art und Weise ermittelt werden, die das reale Verhalten erheblich besser widerspiegelt als die üblichen Vorgehensweisen des Standes der Technik. Es ist ohne weiteres möglich, die entsprechende Software (also das Computerprogramm 6) bei einer bereits vorhandenen Auswertungseinrichtung aufzuspielen und so einen Upgrade einer bestehenden Auswertungseinrichtung zu einer erfindungsgemäßen Auswertungseinrichtung 4 vorzunehmen.

Bezugszeichenliste

1   Walzgut
2   Walzwerk
3   Erfassungseinrichtungen
4   Auswertungseinrichtung
5   Schnittstelle
6   Computerprogramm
7   Maschinencode

| | |
|---|---|
| a, aopt | Parameter |
| b | Breite |
| C | Steuergrößen |
| di | Einzelbewertungen |
| f, f1, f2, f3 h | Funktionen |
| gi | Wichtungsfaktoren |
| KWk | Kennwerte |
| rB, rD, rL | Richtungen |
| S1 bis S17 | Schritte |
| x, xi, xk | Orte |
| yi | Messdaten |

$\delta 0$   Minimalwert

**Patentansprüche**

1. Auswertungsverfahren für mittels einer Erfassungseinrichtung (3) erfasster Messdaten (yi) eines flachen Walzguts (1),

   - wobei die Messdaten (yi) jeweils einem bestimmten Ort (xi) in Längsrichtung (rL) und/oder Breitenrichtung (rB) und/oder Dickenrichtung (rD) des flachen Walzguts (1) zugeordnet sind, so dass die Messdaten (yi) eine entsprechende ortsaufgelöste Verteilung bilden,

- wobei eine Auswertungseinrichtung (4) die Messdaten (yi) von der Erfassungseinrichtung (3) entgegennimmt,
- wobei die Auswertungseinrichtung (4) Parameter (a) für eine mit dem Ort (xi) in Längsrichtung (rL) und/oder Breitenrichtung (rB) und/oder Dickenrichtung (rD) des flachen Walzguts (1) variierende Funktion (f) derart festlegt, dass eine Abweichung der mit den optimierten Werten (aopt) der Parameter (a) parametrierten Funktion (f) von den Messdaten (yi) gemäß einem Beurteilungsmaß ein Minimum annimmt,
- wobei die Auswertungseinrichtung (4) basierend auf der Funktion (f) weitergehende Auswertungen vornimmt,
- **dadurch gekennzeichnet, dass** das Beurteilungsmaß durch eine Summe von Einzelbewertungen (di) bestimmt ist,
- wobei die Auswertungseinrichtung (4) die Einzelbewertungen (di) anhand des Betrages der Differenz eines jeweiligen Messdatums (yi) und des Wertes der Funktion (f) am Ort dieses Messdatums (yi) ermittelt,
- wobei die jeweilige Einzelbewertung (di) zwar mit dem Betrag der Differenz des jeweiligen Messdatums (yi) und des Wertes der Funktion (f) am Ort dieses Messdatums (yi) ansteigt, aber weniger als quadratisch ansteigt.

2. Auswertungsverfahren nach Anspruch 1,
   **dadurch gekennzeichnet,**
   **dass** die jeweilige Einzelbewertung (di) zumindest in etwa linear und vorzugsweise exakt linear mit dem Betrag der Differenz des jeweiligen Messdatums (yi) und des Wertes der Funktion (f) am Ort dieses Messdatums (yi) ansteigt.

3. Auswertungsverfahren nach Anspruch 1,
   **dadurch gekennzeichnet,**
   **dass** die Auswertungseinrichtung (4) zum Festlegen der Parameter (a) in einer Anzahl von Iterationen

   - für die jeweilige Iteration

     -- jeweils eine Summe von für die jeweilige Iteration gültigen Einzelbewertungen (di) ermittelt und für die jeweilige Iteration gültige Parameter (a) festlegt, so dass eine Abweichung der Funktion (f), wie sie durch die für die jeweilige Iteration gültigen Parameter (a) bestimmt ist, von den Messdaten (yi) gemäß dem Beurteilungsmaß ein Minimum annimmt,
     -- die für die jeweilige Iteration gültigen Einzelbewertungen (di) durch Wichtung des Quadrates der Differenz des jeweiligen Messdatums (yi) und des Wertes der Funktion (f), wie sie durch die für die jeweilige Iteration gültigen Parameter (a) bestimmt ist, am Ort (xi) dieses Messdatums (yi) mit einem für das jeweilige Messdatum (yi) und die jeweilige Iteration individuellen Wichtungsfaktor (gi) ermittelt und

   - entweder die für die jeweilige Iteration gültigen Parameter (a) als endgültig festgelegte Parameter (a) übernimmt oder für die Messdaten (yi) anhand des Betrages der Differenz des jeweiligen Messdatums (yi) und des Wertes der Funktion (f), wie sie durch die für die jeweilige Iteration gültigen Parameter (a) bestimmt ist, den Wichtungsfaktor (gi) für das jeweilige Messdatum (yi) für die nächste Iteration ermittelt.

4. Auswertungsverfahren nach Anspruch 3,
   **dadurch gekennzeichnet,**
   **dass** der jeweilige Wichtungsfaktor (gi) für das jeweilige Messdatum (yi) für die nächste Iteration

   - mit dem Betrag der Differenz des jeweiligen Messdatums (yi) und des Wertes der Funktion (f), wie sie durch die für die jeweilige Iteration gültigen Parameter (a) bestimmt ist, streng monoton fällt, wenn der Betrag der Differenz des jeweiligen Messdatums (yi) und des Wertes der Funktion (f), wie sie durch die für die jeweilige Iteration gültigen Parameter (a) bestimmt ist, zwischen einem Minimalwert ($\delta 0$) und einem Maximalwert liegt,
   - mit dem Betrag der Differenz des jeweiligen Messdatums (yi) und des Wertes der Funktion (f), wie sie durch die für die jeweilige Iteration gültigen Parameter (a) bestimmt ist, monoton oder streng monoton fällt, wenn der Betrag der Differenz des jeweiligen Messdatums (yi) und des Wertes der Funktion (f), wie sie durch die für die jeweilige Iteration gültigen Parameter (a) bestimmt ist, unterhalb des Minimalwertes ($\delta 0$) liegt, und
   - mit dem Betrag der Differenz des jeweiligen Messdatums (yi) und des Wertes der Funktion (f), wie sie durch die für die jeweilige Iteration gültigen Parameter (a) bestimmt ist, weiterhin streng monoton fällt oder den Wert 0 annimmt, wenn der Betrag der Differenz des jeweiligen Messdatums (yi) und des Wertes der Funktion (f), wie sie durch die für die jeweilige Iteration gültigen Parameter (a) bestimmt ist, oberhalb des Maximalwertes liegt.

5. Auswertungsverfahren nach Anspruch 4,
   **dadurch gekennzeichnet,**
   **dass** der Wichtungsfaktor (gi) des jeweiligen Messdatums (yi) für die nächste Iteration zumindest dann, wenn der Betrag der Differenz des jeweiligen Messdatums (yi) und des Wertes der Funktion (f), wie sie durch die für die jeweilige Iteration gültigen Parameter (a) bestimmt ist, zwischen dem Minimalwert ($\delta$0) und dem Maximalwert liegt, zumindest in etwa gleich dem Kehrwert des Betrages der Differenz des jeweiligen Messdatums (yi) und des Wertes der Funktion (f), wie sie durch die für die jeweilige Iteration gültigen Parameter (a) bestimmt ist, ist.

6. Computerprogramm, das Maschinencode (7) umfasst, der von einer mit einer Erfassungseinrichtung (3) zum Erfassen von Messdaten (yi) eines flachen Walzguts (1), die jeweils einem bestimmten Ort (xi) in Längsrichtung (rL) und/oder Breitenrichtung (rB) und/oder Dickenrichtung (rD) des flachen Walzguts (1) zugeordnet sind, so dass die Messdaten (yi) eine entsprechende ortsaufgelöste Verteilung bilden, verbundenen Auswertungseinrichtung (4) abarbeitbar ist, wobei die Abarbeitung des Maschinencodes (7) durch die Auswertungseinrichtung (4) bewirkt, dass die Auswertungseinrichtung (4) ein Auswertungsverfahren nach einem der obigen Ansprüche ausführt.

7. Auswertungseinrichtung, wobei die Auswertungseinrichtung eine Schnittstelle (5) zur datentechnischen Verbindung mit einer Erfassungseinrichtung (3) zum Erfassen von Messdaten (yi) eines flachen Walzguts (1), die jeweils einem bestimmten Ort (xi) in Längsrichtung (rL) und/oder Breitenrichtung (rB) und/oder Dickenrichtung (rD) des flachen Walzguts (1) zugeordnet sind, so dass die Messdaten (yi) eine entsprechende ortsaufgelöste Verteilung bilden, aufweist, wobei die Auswertungseinrichtung mit einem Computerprogramm (6) nach Anspruch 6 programmiert ist, so dass sie im Betrieb ein Auswertungsverfahren nach einem der Ansprüche 1 bis 5 ausführt.

8. Auswertungssystem, das aus einer Erfassungseinrichtung (3) zum Erfassen von Messdaten (yi) eines flachen Walzguts (1), die jeweils einem bestimmten Ort (xi) in Längsrichtung (rL) und/oder Breitenrichtung (rB) und/oder Dickenrichtung (rD) des flachen Walzguts zugeordnet sind, so dass die Messdaten (yi) eine entsprechende ortsaufgelöste Verteilung bilden, und einer mit der Erfassungseinrichtung (3) datentechnisch verbundenen Auswertungseinrichtung (4) besteht, wobei die Auswertungseinrichtung (4) nach Anspruch 7 ausgebildet ist, die im Betrieb ein Auswertungsverfahren nach einem der Ansprüche 1 bis 5 ausführt.

**Claims**

1. Evaluation method for measurement data (yi) relating to a flat item of rolling stock (1), which data are acquired by means of an acquisition device (3),

   - wherein the measurement data (yi) are each assigned to a specific location (xi) in the longitudinal direction (rL) and/or the width direction (rB) and/or the thickness direction (rD) of the flat item of rolling stock (1), so that the measurement data (yi) form a corresponding spatially resolved distribution,
   - wherein an evaluation device (4) receives the measurement data (yi) from the acquisition device (3),
   - wherein the evaluation device (4) defines parameters (a) for a function (f) that varies with the location (xi) in the longitudinal direction (rL) and/or the width direction (rB) and/or the thickness direction (rD) of the flat item of rolling stock (1) in such a way that a deviation between the function (f) that is parameterized using the optimized values (aopt) of the parameters (a) and the measurement data (yi) assumes a minimum according to an assessment measure,
   - wherein the evaluation device (4) carries out further evaluations based on the function (f),
   - **characterized in that**
   the assessment measure is determined by a sum of individual evaluations (di),
   - wherein the evaluation device (4) determines the individual evaluations (di) on the basis of the absolute value of the difference between a respective measurement datum (yi) and the value of the function (f) at the location of this measurement datum (yi),
   - wherein, although the respective individual evaluation (di) increases with the absolute value of the difference between the respective measurement datum (yi) and the value of the function (f) at the location of this measurement datum (yi), it increases less than quadratically.

2. Evaluation method according to Claim 1,
   **characterized in that**
   the respective individual evaluation (di) increases at least approximately linearly and preferably exactly linearly with the absolute value of the difference between the respective measurement datum (yi) and the value of the function (f) at the location of this measurement datum (yi).

3. Evaluation method according to Claim 1,

**characterized in that**
the evaluation device (4), in order to define the parameters (a) in a number of iterations,

- for the respective iteration

-- ascertains a sum of individual evaluations (di) that are valid for the respective iteration and defines parameters (a) that are valid for the respective iteration such that a deviation between the function (f), as determined by the parameters (a) that are valid for the respective iteration, and the measurement data (yi) assumes a minimum according to the assessment measure,

-- ascertains the individual evaluations (di) that are valid for the respective iteration by weighting the square of the difference between the respective measurement datum (yi) and the value of the function (f), as determined by the parameters (a) that are valid for the respective iteration, at the location (xi) of this measurement datum (yi) with a weighting factor (gi) individual to the respective measurement datum (yi) and the respective iteration and

- either accepts the parameters (a) that are valid for the respective iteration as final defined parameters (a) or, for the measurement data (yi), on the basis of the absolute value of the difference between the respective measurement datum (yi) and the value of the function (f), as determined by the parameters (a) that are valid for the respective iteration, ascertains the weighting factor (gi) for the respective measurement datum (yi) for the next iteration.

4. Evaluation method according to Claim 3,
**characterized in that**
the respective weighting factor (gi) for the respective measurement datum (yi) for the next iteration

- falls strictly monotonously with the absolute value of the difference between the respective measurement datum (yi) and the value of the function (f), as determined by the parameters (a) that are valid for the respective iteration, if the absolute value of the difference between the respective measurement datum (yi) and the value of the function (f), as determined by the parameters (a) that are valid for the respective iteration, is between a minimum value ($\delta 0$) and a maximum value,

- falls monotonously or strictly monotonously with the absolute value of the difference between the respective measurement datum (yi) and the value of the function (f), as determined by the parameters (a) that are valid for the respective iteration, if the absolute value of the difference between the respective measurement datum (yi) and the value of the function (f), as determined by the parameters (a) that are valid for the respective iteration, is below the minimum value (50), and

- continues to fall strictly monotonously or assumes the value 0 with the absolute value of the difference between the respective measurement datum (yi) and the value of the function (f), as determined by the parameters (a) that are valid for the respective iteration, if the absolute value of the difference between the respective measurement datum (yi) and the value of the function (f), as determined by the parameters (a) that are valid for the respective iteration, is above the maximum value.

5. Evaluation method according to Claim 4,
**characterized in that**
the weighting factor (gi) of the respective measurement datum (yi) for the next iteration, at least if the absolute value of the difference between the respective measurement datum (yi) and the value of the function (f), as determined by the parameters (a) that are valid for the respective iteration, is between the minimum value ($\delta 0$) and the maximum value, is at least approximately equal to the inverse of the absolute value of the difference between the respective measurement datum (yi) and the value of the function (f), as determined by the parameters (a) that are valid for the respective iteration.

6. Computer program comprising machine code (7), which program can be processed by an evaluation device (4) connected to an acquisition device (3) for acquiring measurement data (yi) relating to a flat item of rolling stock (1), the measurement data (yi) each being assigned to a specific location (xi) in the longitudinal direction (rL) and/or the width direction (rB) and/or the thickness direction (rD) of the flat item of rolling stock (1), so that the measurement data (yi) form a corresponding spatially resolved distribution, wherein the processing of the machine code (7) by the evaluation device (4) causes the evaluation device (4) to execute an evaluation method according to any one of the preceding claims.

7. Evaluation device, wherein the evaluation device has an interface (5) for data connection to an acquisition device (3) for acquiring measurement data (yi) relating to a flat item of rolling stock (1), the measurement data (yi) each being assigned to a specific location (xi) in the longitudinal direction (rL) and/or the width direction (rB) and/or the thickness direction (rD) of the flat item of rolling stock (1), so that the measurement data (yi) form a corresponding spatially resolved distribution, wherein the evaluation device is programmed with a computer program (6) according to Claim 6, so that said evaluation device executes an evaluation method according to any one of Claims 1 to 5 during operation.

8. Evaluation system, consisting of an acquisition device (3) for acquiring measurement data (yi) relating to a flat item of rolling stock (1), the measurement data (yi) each being assigned to a specific location (xi) in the longitudinal direction (rL) and/or the width direction (rB) and/or the thickness direction (rD) of the flat item of rolling stock, so that the measurement data (yi) form a corresponding spatially resolved distribution, and an evaluation device (4) connected for data purposes to the acquisition device (3), wherein the evaluation device (4) is designed according to Claim 7 and executes an evaluation method according to any one of Claims 1 to 5 during operation.

**Revendications**

1. Procédé d'évaluation pour des données de mesure (yi) détectées au moyen d'un dispositif de détection (3) d'un produit laminé plat (1),

   - dans lequel les données de mesure (yi) sont associées respectivement à un emplacement (xi) déterminé dans le sens de la longueur (rL) et/ou le sens de la largeur (rB) et/ou le sens de l'épaisseur (rD) du produit laminé plat (1), de sorte que les données de mesure (yi) forment une répartition à résolution spatiale correspondante,
   - dans lequel un dispositif d'évaluation (4) reçoit les données de mesure (yi) en provenance du dispositif de détection (3),
   - dans lequel le dispositif d'évaluation (4) fixe des paramètres (a) pour une fonction (f) variant avec l'emplacement (xi) dans le sens de la longueur (rL) et/ou le sens de la largeur (rB) et/ou le sens de l'épaisseur (rD) du produit laminé plat (1) de telle sorte qu'une déviation de la fonction (f), paramétrée avec les valeurs optimisées (aopt) des paramètres (a), provenant des données de mesure (yi) adopte un minimum selon une mesure d'estimation,
   - dans lequel le dispositif d'évaluation (4) procède à des évaluations supplémentaires sur la base de la fonction (f),
   - **caractérisé en ce que**
   la mesure d'estimation est déterminée par le biais d'une somme d'évaluations individuelles (di),
   - dans lequel le dispositif d'évaluation (4) établit les évaluations individuelles (di) à l'aide du montant de la différence d'une donnée de mesure (yi) respective et de la valeur de la fonction (f) à l'emplacement de cette donnée de mesure (yi),
   - dans lequel l'évaluation individuelle (di) respective augmente certes avec le montant de la différence de la donnée de mesure (yi) respective et de la valeur de la fonction (f) à l'emplacement de cette donnée de mesure (yi), mais augmente moins que quadratiquement.

2. Procédé d'évaluation selon la revendication 1,
   **caractérisé en ce que**
   l'évaluation individuelle (di) respective augmente au moins de manière approximativement linéaire et de préférence de manière exactement linéaire avec le montant de la différence de la donnée de mesure (yi) respective et de la valeur de la fonction (f) à l'emplacement de cette donnée de mesure (yi).

3. Procédé d'évaluation selon la revendication 1,
   **caractérisé en ce que**
   le dispositif d'évaluation (4) pour la fixation des paramètres (a) dans une pluralité d'itérations

   - pour l'itération respective

     -- établit respectivement une somme d'évaluations individuelles (di) valables pour l'itération respective et fixe des paramètres (a) valables pour l'itération respective, de sorte qu'une déviation de la fonction (f), comme elle est déterminée par le biais des paramètres (a) valables pour l'itération respective, provenant des données de mesure (yi) adopte un minimum selon la mesure d'estimation,
     -- établit les évaluations individuelles (di) valables pour l'itération respective par pondération du carré de la différence de la donnée de mesure (yi) respective et de la valeur de la fonction (f), comme elle est déterminée par le biais des paramètres (a) valables pour l'itération respective, à l'emplacement (xi) de cette donnée de mesure (yi) avec un facteur de pondération individuel (gi) pour la donnée de mesure (yi) respective et l'itération respective et

- soit prend les paramètres (a) valables pour l'itération respective en tant que paramètres (a) fixés définitivement, soit établit le facteur de pondération (gi) pour la donnée de mesure (yi) respective pour la prochaine itération pour les données de mesure (yi) à l'aide du montant de la différence de la donnée de mesure (yi) respective et de la valeur de la fonction (f), comme elle est déterminée par le biais des paramètres (a) valables pour l'itération respective.

4. Procédé d'évaluation selon la revendication 3, **caractérisé en ce que** le facteur de pondération (gi) respectif pour la donnée de mesure (yi) respective pour la prochaine itération

- chute de manière strictement monotone avec le montant de la différence de la donnée de mesure (yi) respective et de la valeur de la fonction (f), comme elle est déterminée par le biais des paramètres (a) valables pour l'itération respective, lorsque le montant de la différence de la donnée de mesure (yi) respective et de la valeur de la fonction (f), comme elle est déterminée par le biais des paramètres (a) valables pour l'itération respective, se situe entre une valeur minimale ($\delta 0$) et une valeur maximale,
- chute de manière monotone ou strictement monotone avec le montant de la différence de la donnée de mesure (yi) respective et de la valeur de la fonction (f), comme elle est déterminée par le biais des paramètres (a) valables pour l'itération respective, lorsque le montant de la différence de la donnée de mesure (yi) respective et de la valeur de la fonction (f), comme elle est déterminée par le biais des paramètres (a) valables pour l'itération respective, se situe au-dessous de la valeur minimale ($\delta 0$), et
- continue de chuter de manière strictement monotone avec le montant de la différence de la donnée de mesure (yi) respective et de la valeur de la fonction (f), comme elle est déterminée par le biais des paramètres (a) valables pour l'itération respective, ou adopte la valeur 0 lorsque le montant de la différence de la donnée de mesure (yi) respective et de la valeur de la fonction (f), comme elle est déterminée par le biais des paramètres (a) valables pour l'itération respective, se situe au-dessus de la valeur maximale.

5. Procédé d'évaluation selon la revendication 4, **caractérisé en ce que** le facteur de pondération (gi) de la donnée de mesure (yi) respective pour la prochaine itération est, tout du moins lorsque le montant de la différence de la donnée de mesure (yi) respective et de la valeur de la fonction (f), comme elle est déterminée par le biais des paramètres (a) valables pour l'itération respective, se situe entre la valeur minimale ($\delta 0$) et la valeur maximale, au moins approximativement égal à la valeur inverse du montant de la différence de la donnée de mesure (yi) respective et de la valeur de la fonction (f), comme elle est déterminée par le biais des paramètres (a) valables pour l'itération respective.

6. Programme informatique, lequel comporte du code machine (7), lequel peut être traité par un dispositif d'évaluation (4) relié à un dispositif de détection (3) pour la détection de données de mesure (yi) d'un produit laminé plat (1), lesquelles sont associées respectivement à un emplacement (xi) déterminé dans le sens de la longueur (rL) et/ou le sens de la largeur (rB) et/ou le sens de l'épaisseur (rD) du produit laminé plat (1), de sorte que les données de mesure (yi) forment une répartition à résolution spatiale correspondante, dans lequel le traitement du code machine (7) par le dispositif d'évaluation (4) a pour effet que le dispositif d'évaluation (4) exécute un procédé d'évaluation selon l'une des revendications précédentes.

7. Dispositif d'évaluation, le dispositif d'évaluation comprenant une interface (5) pour la liaison par communication de données à un dispositif de détection (3) pour la détection de données de mesure (yi) d'un produit laminé plat (1), lesquelles sont associées respectivement à un emplacement (xi) déterminé dans le sens de la longueur (rL) et/ou le sens de la largeur (rB) et/ou le sens de l'épaisseur (rD) du produit laminé plat (1), de sorte que les données de mesure (yi) forment une répartition à résolution spatiale correspondante, le dispositif d'évaluation étant programmé avec un programme informatique (6) selon la revendication 6, de sorte qu'il exécute, lors de son fonctionnement, un procédé d'évaluation selon l'une des revendications 1 à 5.

8. Système d'évaluation, lequel est constitué d'un dispositif de détection (3) pour la détection de données de mesure (yi) d'un produit laminé plat (1), lesquelles sont associées respectivement à un emplacement (xi) déterminé dans le sens de la longueur (rL) et/ou le sens de la largeur (rB) et/ou le sens de l'épaisseur (rD) du produit laminé plat (1), de sorte que les données de mesure (yi) forment une répartition à résolution spatiale correspondante, et d'un dispositif d'évaluation (4) relié par communication de données au dispositif de détection (3), dans lequel le dispositif d'évaluation (4) est conçu selon la revendication 7, lequel exécute, lors de son fonctionnement, un procédé d'évaluation selon l'une des revendications 1 à 5.

FIG 1

FIG 2

FIG 3

FIG 4

$$yi \quad \sim S1$$

$$di = di(\,|\,yi - f_a(xi)\,|\,) \quad \sim S2$$

$$aopt = \arg\min_a (\,\sum_i di) \quad \sim S3$$

$$KWk = f_{aopt}(xk)$$
$$C = C(f_{aopt}) \quad \sim S4$$

## FIG 5

$$di = |yi - f_a(xi)|$$ — S2

## FIG 6

S11 — $yi$

S12 — $gi = 1$

S13 — $di = gi \cdot (yi - f_a(xi))^2$

S14 — $aopt = \arg\min_a \left( \sum_i di \right)$

S15

(−) $gi = h(|yi - f_{aopt}(xi)|)$ — S17

(+) S16 — $KWk = f_{aopt}(xk)$
$C = C(f_{aopt})$

FIG 7

$$gi = \frac{1}{\max(|yi - f_{aopt}(xi)|, \delta 0)} \quad \text{S17}$$

FIG 8

$$gi = \frac{1}{\sqrt{(yi - f_{aopt}(xi))^2 + \delta 0^2}} \quad \text{S17}$$

FIG 9

$$gi = \exp(-|yi - f_{aopt}(xi)|/\delta 0) \quad \text{S17}$$

FIG 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2023041253 A